# EUROPEAN PATENT SPECIFICATION

(11) **EP 4 414 601 B1**
(45) Date of publication and mention of the grant of the patent: **16.04.2025**
(21) Application number: 23156182.0
(22) Date of filing: 10.02.2023
(51) Int. Cl.: F17C 7/02, F17C 3/00

(54) **SYSTEM AND METHOD FOR PRESSURE-MAINTENANCE OF AN INTERMEDIATE STORAGE TANK DURING LCO2 INJECTION AT AN LCO2 RECEIVING TERMINAL**
SYSTEM UND VERFAHREN ZUR DRUCKAUFRECHTERHALTUNG EINES ZWISCHENSPEICHERTANKS WÄHREND EINER LCO2-INJEKTION AN EINEM LCO2-EMPFANGSENDGERÄT
SYSTÈME ET PROCÉDÉ DE MAINTIEN DE PRESSION D'UN RÉSERVOIR INTERMÉDIAIRE DE STOCKAGE PENDANT L'INJECTION DE LCO2 AU NIVEAU D'UN TERMINAL RÉCEPTEUR LCO2

(43) Date of publication of application: 14.08.2024
(73) Proprietor: Horisont Energi AS, 4313 Sandnes (NO)
(72) Inventor: FELBAB, Nikola, 4313 SANDNES (NO)
(74) Representative: Brann AB

(56) References cited:
- WO-A1-2005/075882
- KR-A- 20110 123 056
- US-A1- 2018 306 383
- NOH HYONJEONG ET AL: "Conceptualization of CO2 Terminal for Offshore CCS Using System Engineering Process", ENERGIES, vol. 12, no. 22, 15 November 2019 (2019-11-15), pages 4350, XP093055447, DOI: 10.3390/en12224350

## Description

### FIELD OF THE INVENTION

The present invention generally relates to carbon capture and storage (CCS) technology, and more particularly to a system and method for pressure-maintenance of an intermediate liquefied CO₂ (LCO₂) storage tank during injection into a pipeline leading into a long-term LCO₂ storage facility of LCO₂ being withdrawn from the tank at a receiving terminal connected with the long term LCO₂ storage facility. The invention uses a slip stream of LCO₂ withdrawn from the warmer stream of LCO₂ being directed to a long-term LCO₂ storage from the terminal, which slip stream is fed into a tank heater in the intermediate storage tank for indirectly heating the contents of the tank.

### BACKGROUND ART

Captured and liquefied carbon dioxide can be transported in the liquid phase (LCO₂) from various locations and customers to CO₂ receiving terminals at which the CO₂ will be temporarily stored in intermediate buffer storage tanks onshore, before being pumped in a dense phase via a pipeline and injected into an offshore long-term storage reservoir. The purpose of the buffer storage is to allow for continuous injection to the long-term storage reservoir despite intermittent LCO₂ cargo transfer from ship.

A general description of an outline of a CCS chain can be found in Conceptualization of CO₂ Terminal for Offshore CCS Using System Engineering Process by Hyonjeong et al. Energies, 2019, 12, 4350.

Discharge from an intermediate LCO₂ tank of LCO₂ to be injected into a reservoir for long-term storage will cause the pressure in the intermediate storage tank to drop. In case of operating pressures near the triple point of CO₂, it is necessary to ensure that the pressure in the tank does not drop sufficiently for dry ice to form. Standard liquefied gas terminals (e.g. LNG) counteract pressure drop by force-vaporising a portion of the liquefied gas and returning it as vapour to the tank, thereby replacing the emptied liquid volume. However, LCO₂ in CCS applications typically contains some water (e.g. 30-70 ppm by mol). The LCO₂ is mostly kept at temperatures below -20°C at the terminal, at which temperature CO₂ hydrates could potentially form. In the liquid phase of the LCO₂, the concentration of water is insufficient to form hydrates, and thus poses no problem. However, if it is passed through a force-vaporiser, the same liquid composition (including the full water content) becomes vapour, which can form hydrates either in the vaporiser itself, which could cause blockages in the vaporiser, or, during a subsequent pressure let-down back to tank pressure, in the piping downstream of a corresponding expansion valve. This is particularly likely in the case of intermediate storage operation near the triple point.

It would be desirable to be able to provide for pressure-maintenance of an intermediate LCO₂ storage tank during discharge of LCO₂ from the tank so as to avoid formation of dry ice in the intermediate LCO₂ storage tank during LCO₂ discharge from the tank, while at the same time reducing the risk of undesired formation of hydrates from water contained in the LCO₂.

It is an object of the present invention to provide a system and a method enabling the above.

### SUMMARY OF THE INVENTION

According to the invention, the above object has been achieved by using indirect liquid-to-liquid heat exchange using LCO₂, wherein a slip stream of LCO₂ is withdrawn from a pressurised stream of LCO₂ in the system leading to an injection pipeline, which stream of LCO₂ has a higher temperature than that of the LCO₂ contained in the intermediate storage tank, and is forwarded to the intermediate storage tank for heat exchange with the LCO₂ contained therein, and, after the heat exchange, the cooled slipstream of LCO₂ is forwarded to the stream of LCO₂ being discharged from the intermediate tank to be pressurised, at a location downstream of a first pumping stage of the stream of LCO₂ being discharged from the intermediate tank.

Accordingly, in one aspect the invention relates to a system **110** configured to maintaining a desired pressure in a discharging intermediate LCO₂ tank **10** during discharging of LCO₂ from the tank thereby avoiding formation of dry ice in the intermediate LCO₂ storage tank during the LCO₂ discharge from the tank, which system avoids or reduces the risk of formation of hydrates in the system from water contained in the LCO₂, comprising: an intermediate LCO₂ storage tank **10;** an LCO₂ discharge conduit **41, 43, 51, 53, 55, 30; 41, 43, 61, 62, 63, 65, 30; 41, 43, 61, 62**, **73, 74, 30** connected to the intermediate LCO₂ storage tank **10** configured to discharge LCO₂ to be injected into a long-term CO₂ storage **1;** a first LCO₂ pump **15** arranged along the discharge conduit **41, 43, 51, 53, 55, 30; 41, 43, 61, 62, 63, 65, 30; 41, 43, 61, 62, 73, 74, 30**; an injection pump **17** arranged along the discharge conduit **41, 43, 51, 53, 55, 30; 41, 43, 61, 62, 63, 65, 30; 41, 43, 61, 62**, **73, 74, 30** downstream of the first LCO₂ pump **15;** an LCO₂ heater **19** arranged along the discharge conduit **41, 43, 51, 53, 55, 30; 41, 43, 61, 62, 63, 65, 30; 41, 43, 61, 62, 73, 74**, **30** downstream of the LCO₂ injection pump **17;** which system additionally comprises a tank heater **11** configured to receive and to transfer heat from a fluid stream being led through the tank heater **11 to** the contents of the intermediate storage tank **10;** an LCO₂ slip stream conduit **57; 67, 68, 66; 75, 79, 68, 66** arranged along the discharge conduit **41, 43, 51, 53, 55, 30; 41, 43, 61, 62, 63, 65, 30; 41, 43**, **61, 62, 73, 74**, **30** located downstream of the LCO₂ heater **19** configured to withdraw and convey, as the fluid stream, a slip stream in conduit **57; 66, 68, 67; 75, 79, 68, 66** to the tank heater **11** from the discharge conduit **41, 43, 51, 53, 55, 30; 41, 43, 61, 62, 63, 65, 30; 41, 43**, **61, 62, 73, 74, 30**; and, a slip stream exit conduit **59; 69** configured to convey a fluid stream effluent from the tank heater **11** to the discharge conduit **41, 43, 51, 53, 55, 30; 41, 43, 61**, **62, 63, 65, 30; 41, 43, 61, 62, 73, 74**, **30** at a location downstream of the first LCO₂ pump **15.**

In another aspect the invention refers to a method for maintaining pressure in a discharging intermediate LCO₂ tank during discharge of LCO₂ from the tank for avoidance of formation of dry ice in the intermediate LCO₂ storage tank during discharge, which system avoids or reduces the risk of formation of hydrates in the system from water contained in the LCO₂, said method comprising the following steps: **A** discharging a stream of LCO₂ from an intermediate LCO₂ storage tank **10; B** subjecting the stream of LCO₂ from step **A** to pumping in a first LCO₂ pump **15; C** subjecting the stream of LCO₂ from step **B** to pumping in an injection pump **17; D** subjecting the stream of LCO₂ from step **C** to heating in an LCO₂ heater **19,** which method additionally comprises the following steps: **E** withdrawing a slip stream of LCO₂ from a heated stream of LCO₂ obtained in step **D; F** subjecting the slip stream of LCO₂ from step **E** to liquid-to-liquid heat exchange in a tank heater **11** with the liquid contents of the intermediate LCO₂ storage tank **10;** and, **G** returning the slip stream of LCO₂ from step **F** to the stream of LCO₂ from step **B.**

The invention does not require excessive dehydration of the captured CO₂ further upstream in the CCS chain, such as at the liquefaction facility. According to the invention, contamination of either the LCO₂ within the storage tank or the heater's heating medium in the event of a tank-internal heater rupture is prevented.

Further embodiments and advantages of the invention will be apparent from the following detailed description and appended claims.

In the present disclosure, same reference numeral is used both to denote the conduit and the stream flowing therein. For example, reference numeral **41** is used to both denote the discharge stream conduit from the intermediate LCO₂ storage tank **10** (which is connected to the first pump **15),** and also to denote the discharge stream itself flowing in said conduit.

The term "intermediate storage" as used herein denotes a storage intended to be temporary, prior to a long-term storage.

The term "long-term storage" as used herein denotes a storage intended to be permanent.

### BRIEF DESCRIPTION OF THE ATTACHED DRAWINGS

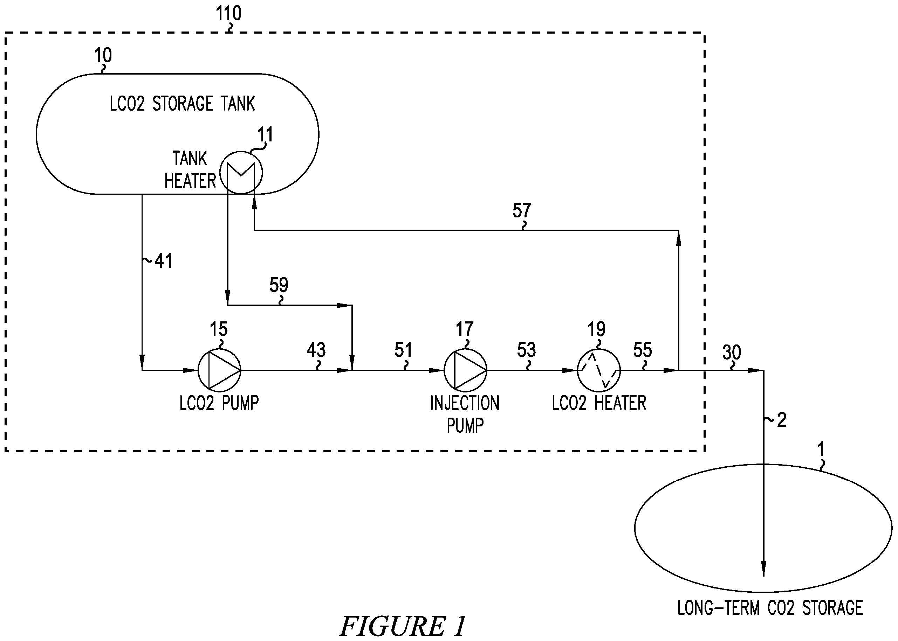

Figure 1 shows an embodiment of the inventive system **110** as indicated by the dashed line in its most generic embodiment, which system is configured to be implemented into an LCO₂ receiving terminal.

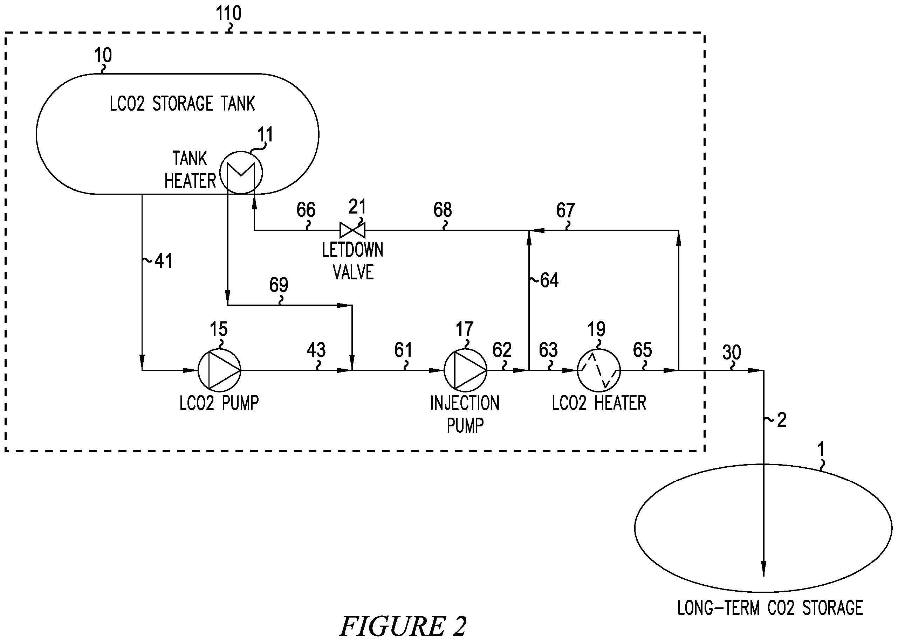

Figure 2 shows another embodiment of the inventive system **110** as indicated by the dashed line, including a pressure let-down valve **21** arranged on the slip stream conduit **67, 68, 66**, and a complementary LCO₂ slip stream conduit **64,** connecting the discharge conduit **41, 43, 61, 62, 63, 65, 30** with the slip stream conduit **67, 68, 66.**

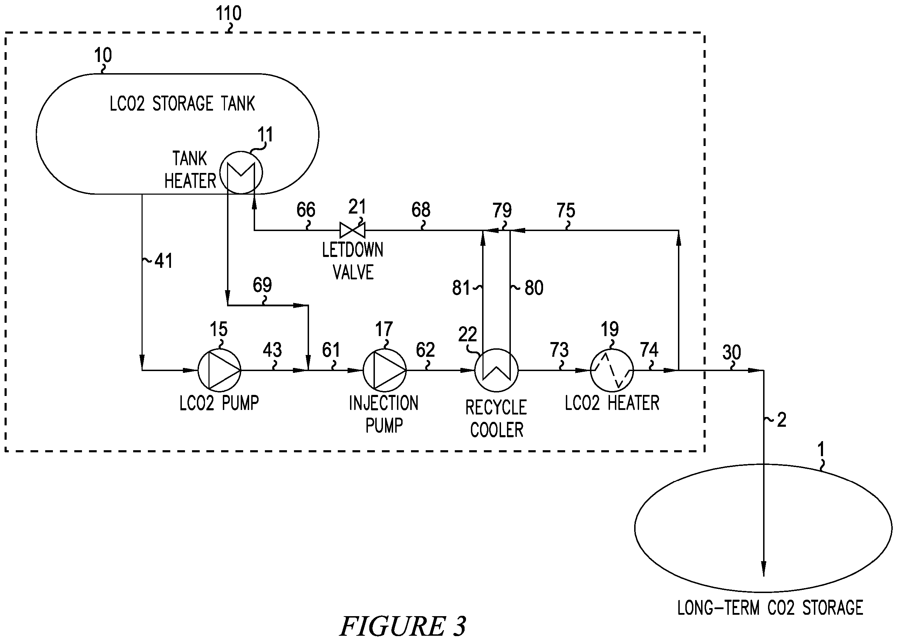

Figure 3 shows yet another embodiment of the inventive system **110** as indicated by the dashed line, including a pressure let-down valve **21** arranged on the slip stream conduit **75, 79, 68, 66,** and a recycle cooler **22** arranged on the discharge conduit **41, 43, 61, 62, 73, 74, 30,** a recycle cooler conduit **80, 81** connected to the slip stream conduit **75, 79, 68, 66**, and to the recycle cooler **22.**

### DETAILED DESCRIPTION OF THE INVENTION

According to the present invention a desired pressure in a discharging intermediate LCO₂ storage tank **10** can be maintained during discharging of LCO₂ from the tank **10,** thereby avoiding formation of dry ice in the intermediate LCO₂ storage tank during the LCO₂ discharge from the tank. The invention also avoids or reduces the risk of formation of hydrates in the system from water contained in the LCO₂. Since the LCO₂ in CCS applications, and hence also in the intermediate LCO₂ storage tank **10,** typically contains some water, it is desirable to prevent the full liquid composition from becoming vapour. According to the present invention pressure in the storage tank **10** is maintained during injection by heating the liquid in the intermediate LCO₂ storage tank to sustain its vapour pressure (bubble point pressure) at the required tank pressure, effectively increasing the heat ingress into the tank in a controlled way. The source of heating is a slipstream of the warmed, pressurised LCO₂ that is injected into a pipeline **2** leading into a long-term CO₂ storage **1,** which is introduced as an indirect heat source to a tank heater **11,** either as an immersed heater (such as a tube bundle, coil bundle, plate pack, or similar), or as an external heater (such as a jacket or coil on the external tank surface). This has the advantage that the heat exchange medium is the LCO₂ itself, and will thus not be prone to freezing when it heats the tank contents. In the case of an immersed heater, any rupture will not cause undesirable contamination of the LCO₂ in the storage tanks, as the fluid on both sides of the tank heater is the same. The LCO₂ used for heating is additionally kept in the liquid phase, and thus avoids the risk of hydrate formation itself.

After heat exchange in tank heater **11,** the cooled slipstream of LCO₂ **59; 69** exiting the tank heater is returned to the stream of LCO₂ being discharged from the intermediate tank at a location downstream of a first pumping stage **15.** Because of temperature approaches in the heat exchanger **11,** the cooled recycled LCO₂ must always be at least slightly warmer than the LCO₂ in the storage tank **10.** If the at least slightly warmer cooled recycled LCO₂ stream is let down to exactly tank pressure, it will flash (partly vaporise), which should not be sent to a pump suction as this will typically cause pump cavitation. But if the slightly warmer cooled recycled LCO₂ is let down to a somewhat higher pressure, e.g. after a first pumping stage **15,** it can remain liquid, which allows for subsequent further pumping.

With reference to the drawings, the slip stream is taken downstream of the LCO₂ heater **19** from conduit **55** as shown in **Fig. 1****, 65** as shown in **Fig. 2****,** and **74** as shown in **Fig. 3****,** respectively.

With reference to **Fig. 1****,** an embodiment is shown wherein LCO₂ is pumped in two **15, 17** (or more - not shown) stages, and then heated prior to entering the pipeline **2.** A slipstream of the warmed, high-pressure LCO₂ to be injected into the pipeline is recycled to a heater to warm the liquid in the storage tank, itself being cooled, and returned to an intermediate point at a higher pressure than the storage tank, such as downstream of the first pumping stage.

With reference to **Fig. 2****,** another embodiment is shown wherein the LCO₂ pressure of the withdrawn slip stream is reduced prior to entering the tank heater, and the LCO₂ stream used as the heating medium is part-bypassed via complementary LCO₂ slip stream conduit **64** to allow control of the temperature the LCO₂ entering the let-down valve, in order to ensure that the heating LCO₂ passing through the tank heater does not vaporise as a result of the pressure reduction. Accordingly, in embodiments wherein temperature control is not required, e.g. depending on the performance characteristics of the LCO₂ heater **19,** and/or the temperature of the heated effluent **65,** a complementary LCO₂ slip stream conduit **64** may be omitted.

With reference to **Fig. 3****,** yet another embodiment is shown wherein temperature control of the stream **68** entering the let-down valve is effected by part-cooling with high-pressure, cold LCO₂ **62** upstream of the LCO₂ heater **19.**

### LIST OF REFERENCE SIGNS USED

- 1: underground long-term storage facility
- 2: pipeline
- 10: intermediate LCO₂ storage tank
- 11: tank heater
- 15: first LCO₂ pump on LCO₂ discharge conduit
- 17: injection pump
- 19: LCO₂ heater
- 21: pressure let-down valve
- 22: recycle cooler
- 57: LCO₂ slip stream conduit
- 67, 68, 66: LCO₂ slip stream conduit
- 75, 79, 68, 66: LCO₂ slip stream conduit
- 41, 43, 51, 53, 55, 30: LCO₂ discharge conduit
- 41, 43, 61, 62, 63, 65, 30: LCO₂ discharge conduit
- 41, 43, 61, 62, 73, 74, 30: LCO₂ discharge conduit
- 59: slip stream exit conduit from tank heater
- 64: complementary LCO₂ slip stream conduit
- 69: slip stream exit conduit from tank heater
- 80, 81: recycle cooler conduit
- 110: system

## Claims

1. A system (110) configured to maintaining a desired pressure in a discharging intermediate LCO₂ tank (10) during discharging of LCO₂ from the tank thereby avoiding formation of dry ice in the intermediate LCO₂ storage tank during the LCO₂ discharge from the tank, which system avoids or reduces the risk of formation of hydrates in the system from water contained in the LCO₂, comprising:
- an intermediate LCO₂ storage tank (10);
- an LCO₂ discharge conduit (41, 43, 51, 53, 55, 30; 41, 43, 61, 62, 63, 65, 30; 41, 43, 61, 62, 73, 74, 30) connected to the intermediate LCO₂ storage tank (10) configured to discharge LCO₂ to be injected into a long-term CO₂ storage (1);
- a first LCO₂ pump (15) arranged along the discharge conduit (41, 43, 51, 53, 55, 30; 41, 43, 61, 62, 63, 65, 30; 41, 43, 61, 62, 73, 74, 30);
- an injection pump (17) arranged along the discharge conduit (41, 43, 51, 53, 55, 30; 41, 43, 61, 62, 63, 65, 30; 41, 43, 61, 62, 73, 74, 30) downstream of the first LCO₂ pump (15);
- an LCO₂ heater (19) arranged along the discharge conduit (41, 43, 51, 53, 55, 30; 41, 43, 61, 62, 63, 65, 30; 41, 43, 61, 62, 73, 74, 30) downstream of the LCO₂ injection pump (17);
**characterized in** additionally comprising,
- a tank heater (11) configured to receive and to transfer heat from a fluid stream being led through the tank heater (11) to the contents of the intermediate storage tank (10);
- an LCO₂ slip stream conduit (57; 67, 68, 66; 75, 79, 68, 66) arranged along the discharge conduit (41, 43, 51, 53, 55, 30; 41, 43, 61, 62, 63, 65, 30; 41, 43, 61, 62, 73, 74, 30) located downstream of the LCO₂ heater (19) configured to withdraw and convey, as the fluid stream, a slip stream in conduit (57; 67, 68, 66; 75, 79, 68, 66) to the tank heater (11) from the discharge conduit (41, 43, 51, 53, 55, 30; 41, 43, 61, 62, 63, 65, 30; 41, 43, 61, 62, 73, 74, 30); and,
- a slip stream exit conduit (59; 69) configured to convey a fluid stream effluent from the tank heater (11) to the discharge conduit (41, 43, 51, 53, 55, 30; 41, 43, 61, 62, 63, 65, 30; 41, 43, 61, 62, 73, 74, 30) at a location downstream of the first LCO₂ pump (15).

2. The system of claim 1, additionally comprising
- a pressure let-down valve (21) arranged along the slip stream in conduit (67, 68, 66).

3. The system of claim 2, additionally comprising:
- a complementary LCO₂ slip stream conduit (64) arranged along discharge conduit (41, 43, 61, 62, 63, 65, 30) at a location downstream of the injection pump (17) and upstream of the LCO₂ heater (19) configured to withdraw a complementary slip stream from the discharge conduit (41, 43, 61, 62, 63, 65, 30) and to connect the latter with the slip stream in conduit (67, 68, 66) at a location upstream of the pressure let-down valve (21).

4. The system of claim 1, additionally comprising
- a pressure let-down valve (21) arranged along the slip stream in conduit (75, 79, 68, 66); and,
- a recycle cooler (22) arranged along the discharge conduit (41, 43, 61, 62, 73, 74, 30) at a located downstream of the injection pump (17) and upstream of the LCO₂ heater (19) configured to receive a partial stream from the slip stream;
- a recycle cooler inlet conduit (80) arranged along the slip stream conduit (75, 79, 68, 66) at a location upstream of the pressure let-down valve (21) configured to connect the slip stream conduit (75, 79, 68, 66) with an inlet of the recycle cooler (22); and,
- a recycle cooler outlet conduit (81) arranged along the slip stream conduit (75, 79, 68, 66) at a location downstream of the recycle cooler inlet conduit (80),
wherein the partial stream from the slip stream is being led through the recycle cooler (22).

5. A method for maintaining pressure in a discharging intermediate LCO₂ tank during discharge of LCO₂ from the tank for avoidance of formation of dry ice in the intermediate LCO₂ storage tank during discharge, which system avoids or reduces the risk of formation of hydrates in the system from water contained in the LCO₂, said method comprising the following steps:
A) discharging a stream of LCO₂ from an intermediate LCO₂ storage tank (10);
B) subjecting the stream of LCO₂ from step (A) to pumping in a first LCO₂ pump (15);
C) subjecting the stream of LCO₂ from step (B) to pumping in an injection pump (17);
D) subjecting the stream of LCO₂ from step (C) to heating in an LCO₂ heater (19)
**characterized in** additionally comprising the following steps:
E) withdrawing a slip stream of LCO₂ from a heated stream of LCO₂ obtained in step (D);
F) subjecting the slip stream of LCO₂ from step (E) to liquid-to-liquid heat exchange in a tank heater (11) with the liquid contents of the intermediate LCO₂ storage tank (10); and,
G) returning the slip stream of LCO₂ from step (F) to the stream of LCO₂ from step (B).

6. The method of claim 5, additionally comprising the following steps:
H) subjecting the slip stream of LCO₂ from step (E) to a reduced pressure in a pressure let-down valve (21);
I) withdrawing a complementary LCO₂ slip stream from step (C); and,
J) combining the complementary LCO₂ slip stream from step (I) with the slip stream of LCO₂ from step (E) before entering to step (H).

7. The method of claim 5, additionally comprising the following steps:
H) subjecting the slip stream of LCO₂ from step (E) to a reduced pressure in a pressure let-down valve (21);
K) withdrawing a partial stream from the LCO₂ slip stream from step (C);
L) subjecting the partial stream of LCO₂ from step (K) to liquid-to-liquid heat exchange in a recycle cooler (22) with the stream of LCO₂ from step (C) before entering to step (D); and,
M) combining the partial stream of LCO₂ from step (L) with the remaining slip stream resulting from step (K) before entering to step (H).

## Patentansprüche

1. System (110), das konfiguriert ist, einen gewünschten Druck in einem abgebenden LCO₂-Zwischentank (10) während einer Abgabe von LCO₂ aus dem Tank aufrechtzuerhalten, wodurch die Bildung von Trockeneis in dem LCO₂-Zwischenspeichertank während der LCO₂-Abgabe aus dem Tank vermieden wird, wobei das System das Risiko der Bildung von Hydraten in dem System aus in dem LCO₂ enthaltenem Wasser vermeidet oder verringert, das aufweist:
- einen LCO₂-Zwischenspeichertank (10);
- eine LCO₂-Abgabeleitung (41, 43, 51, 53, 55, 30; 41, 43, 61, 62, 63, 65, 30; 41, 43, 61, 62, 73, 74, 30), die mit dem LCO₂-Zwischenspeichertank (10) verbunden und konfiguriert ist, LCO₂ zur Injektion in einen CO₂-Langzeitspeicher (1) abzugeben;
- eine erste LCO₂-Pumpe (15), die entlang der Abgabeleitung (41, 43, 51, 53, 55, 30; 41, 43, 61, 62, 63, 65, 30; 41, 43, 61, 62, 73, 74, 30) angeordnet ist;
- eine Injektionspumpe (17), die entlang der Abgabeleitung (41, 43, 51, 53, 55, 30; 41, 43, 61, 62, 63, 65, 30; 41, 43, 61, 62, 73, 74, 30) stromabwärts von der ersten LCO₂-Pumpe (15) angeordnet ist;
- eine LCO₂-Heizung (19), die entlang der Abgabeleitung (41, 43, 51, 53, 55, 30; 41, 43, 61, 62, 63, 65, 30; 41, 43, 61, 62, 73, 74, 30) stromabwärts von der LCO₂-Injektionspumpe (17) angeordnet ist;
**dadurch gekennzeichnet, dass** es zusätzlich aufweist,
- eine Tankheizung (11), die konfiguriert ist, Wärme von einem Fluidstrom, der durch die Tankheizung (11) geleitet wird, aufzunehmen und auf den Inhalt des Zwischenspeichertanks (10) zu übertragen;
- eine LCO₂-Nachstromleitung (57; 67, 68, 66; 75, 79, 68, 66), die entlang der Abgabeleitung (41, 43, 51, 53, 55, 30; 41, 43, 61, 62, 63, 65, 30; 41, 43, 61, 62, 73, 74, 30) angeordnet ist, die sich stromabwärts von der LCO₂-Heizung (19) befindet und konfiguriert ist, als den Fluidstrom einen Nachstrom in der Leitung (57; 67, 68, 66; 75, 79, 68, 66) von der Abgabeleitung (41, 43, 51, 53, 55, 30; 41, 43, 61, 62, 63, 65, 30; 41, 43, 61, 62, 73, 74, 30) zu entnehmen und zur Tankheizung (11) zu befördern; und,
- eine Nachstrom-Austrittsleitung (59; 69), die konfiguriert ist, einen Fluidstromabfluss von der Tankheizung (11) zur Abgabeleitung (41, 43, 51, 53, 55, 30; 41, 43, 61, 62, 63, 65, 30; 41, 43, 61, 62, 73, 74, 30) an einer Stelle stromabwärts der ersten LCO₂-Pumpe (15) zu befördern.

2. System nach Anspruch 1, das zusätzlich aufweist
- ein Druckabbauventil (21), das entlang des Nachstroms in der Leitung (67, 68, 66) angeordnet ist.

3. System nach Anspruch 2, das zusätzlich aufweist:
- eine komplementäre LCO₂-Nachstromleitung (64), die entlang der Abgabeleitung (41, 43, 61, 62, 63, 65, 30) an einer Stelle stromabwärts von der Einspritzpumpe (17) und stromaufwärts von der LCO₂-Heizung (19) angeordnet und konfiguriert ist, einen komplementären Nachstrom aus der Abgabeleitung (41, 43, 61, 62, 63, 65, 30) zu entnehmen und Letzteren mit dem Nachstrom in der Leitung (67, 68, 66) an einer Stelle stromaufwärts vom Druckabbauventil (21) zu verbinden.

4. System nach Anspruch 1, das zusätzlich aufweist
- ein Druckabbauventil (21), das entlang des Nachstroms in der Leitung (75, 79, 68, 66) angeordnet ist; und,
- einen Rücklaufkühler (22), der entlang der Abgabeleitung (41, 43, 61, 62, 73, 74, 30) an einer Stelle stromabwärts von der Einspritzpumpe (17) und stromaufwärts von der LCO₂-Heizung (19) angeordnet ist, der konfiguriert ist, einen Teilstrom aus dem Nachstrom aufzunehmen;
- eine Rücklaufkühler-Einlassleitung (80), die entlang der Nachstromleitung (75, 79, 68, 66) an einer Stelle stromaufwärts vom Druckabbauventil (21) angeordnet und konfiguriert ist, die Nachstromleitung (75, 79, 68, 66) mit einem Einlass des Rücklaufkühlers (22) zu verbinden; und,
- eine Rücklaufkühler-Abgabeleitung (81), die entlang der Nachstromleitung (75, 79, 68, 66) an einer Stelle stromabwärts von der Rücklaufkühler-Einlassleitung (80) angeordnet ist,
wobei der Teilstrom aus dem Nachstrom durch den Rücklaufkühler (22) geführt wird.

5. Verfahren zur Aufrechterhaltung eines Drucks in einem LCO₂-Zwischentank während der Abgabe von LCO₂ aus dem Tank, um die Bildung von Trockeneis in dem LCO₂-Zwischentank während der Abgabe zu vermeiden, wobei das System das Risiko der Bildung von Hydraten in dem System aus dem im LCO₂ enthaltenen Wasser vermeidet oder verringert, wobei das Verfahren die folgenden Schritte aufweist:
A) Ableiten eines LCO₂-Stroms aus einem LCO₂-Zwischenspeicher (10);
B) Unterziehen des LCO₂-Stroms aus Schritt (A) einem Pumpen in einer ersten LCO₂-Pumpe (15);
C) Unterziehen des LCO₂-Stroms aus Schritt (B) einem Pumpen in einer Injektionspumpe (17);
D) Unterziehen des LCO₂-Stroms aus Schritt (C) einer Erwärmung in einer LCO₂-Heizung (19),
**dadurch gekennzeichnet, dass** es zusätzlich die folgenden Schritte aufweist:
E) Entnehmen eines LCO₂-Nachstroms aus einem in Schritt (D) erhaltenen erwärmten LCO₂-Strom;
F) Unterziehen des LCO₂-Nachstroms aus Schritt (E) einem Flüssigkeit-zu-Flüssigkeit-Wärmeaustausch in einer Tankheizung (11) mit dem flüssigen Inhalt des LCO₂-Zwischenspeichers (10); und,
G) Rückführen des LCO₂-Nachstroms aus Schritt (F) in den LCO₂-Strom aus Schritt (B).

6. Verfahren nach Anspruch 5, das zusätzlich die folgenden Schritte aufweist
H) Aussetzen des LCO₂-Nachstroms aus Schritt (E) einem reduzierten Druck in einem Druckabbauventil (21);
I) Entnehmen eines komplementären LCO₂-Nachstroms aus Schritt (C); und,
J) Kombinieren des komplementären LCO₂-Nachstroms aus Schritt (I) mit dem LCO₂-Nachstrom aus Schritt (E) vor Eintritt in Schritt (H).

7. Verfahren nach Anspruch 5, das zusätzlich folgende Schritte aufweist
H) Aussetzen des LCO₂-Nachstroms aus Schritt (E) einem reduzierten Druck in einem Druckabbauventil (21);
K) Entnehmen eines Teilstroms aus dem LCO₂-Nachstrom aus Schritt (C);
L) Unterziehen des LCO₂-Teilstroms aus Schritt (K) einem Flüssigkeit-zu-Flüssigkeit-Wärmeaustausch in einem Rücklaufkühler (22) mit dem LCO₂-Strom aus Schritt (C) vor dem Eintritt in Schritt (D); und,
M) Kombinieren des LCO₂-Teilstroms aus Schritt (L) mit dem aus Schritt (K) resultierenden verbleibenden Nachstrom vor Eintritt in Schritt (H).

## Revendications

1. Système (110) configuré pour maintenir une pression souhaitée dans un réservoir intermédiaire de LCO₂ (10) en cours d'évacuation pendant l'évacuation de LCO₂ à partir du réservoir, évitant ainsi la formation de glace sèche dans le réservoir de stockage intermédiaire de LCO₂ pendant l'évacuation de LCO₂ à partir du réservoir, ledit système évitant ou réduisant le risque de formation d'hydrates dans le système à partir de l'eau contenue dans le LCO₂, comprenant :
- un réservoir de stockage intermédiaire de LCO₂ (10) ;
- un conduit d'évacuation de LCO₂ (41, 43, 51, 53, 55, 30 ; 41, 43, 61, 62, 63, 65, 30 ; 41, 43, 61, 62, 73, 74, 30) relié au réservoir de stockage intermédiaire de LCO₂ (10) configuré pour évacuer le LCO₂ à injecter dans un stockage à long terme de CO₂ (1) ;
- une première pompe à LCO₂ (15) disposée le long du conduit d'évacuation (41, 43, 51, 53, 55, 30 ; 41, 43, 61, 62, 63, 65, 30 ; 41, 43, 61, 62, 73, 74, 30) ;
- une pompe d'injection (17) disposée le long du conduit d'évacuation (41, 43, 51, 53, 55, 30 ; 41, 43, 61, 62, 63, 65, 30 ; 41, 43, 61, 62, 73, 74, 30) en aval de la première pompe à LCO₂ (15) ;
- un dispositif de chauffage de LCO₂ (19) disposé le long du conduit d'évacuation (41, 43, 51, 53, 55, 30 ; 41, 43, 61, 62, 63, 65, 30 ; 41, 43, 61, 62, 73, 74, 30) en aval de la pompe d'injection de LCO₂ (17) ;
**caractérisé en ce qu'**il comprend en outre,
- un dispositif de chauffage de réservoir (11) configuré pour recevoir et transférer la chaleur d'un flux de fluide conduit à travers le dispositif de chauffage de réservoir (11) au contenu du réservoir de stockage intermédiaire (10) ;
- un conduit de flux de dérivation de LCO₂ (57 ; 67, 68, 66 ; 75, 79, 68, 66) disposé le long du conduit d'évacuation (41, 43, 51, 53, 55, 30 ; 41, 43, 61, 62, 63, 65, 30 ; 41, 43, 61, 62, 73, 74, 30) situé en aval du dispositif de chauffage de LCO₂ (19) configuré pour prélever et transporter, en tant que flux de fluide, un flux de dérivation dans le conduit (57 ; 67, 68, 66 ; 75, 79, 68, 66) vers le dispositif de chauffage de réservoir (11) à partir du conduit d'évacuation (41, 43, 51, 53, 55, 30 ; 41, 43, 61, 62, 63, 65, 30; 41, 43, 61, 62, 73, 74, 30) ; et,
- un conduit de sortie de flux de dérivation (59 ; 69) configuré pour transporter un effluent de flux de fluide depuis le dispositif de chauffage de réservoir (11) vers le conduit d'évacuation (41, 43, 51, 53, 55, 30 ; 41, 43, 61, 62, 63, 65, 30 ; 41, 43, 61, 62, 73, 74, 30) à un emplacement en aval de la première pompe à LCO₂ (15).

2. Système selon la revendication 1, comprenant en outre
- une soupape régulatrice de pression (21) disposée le long du flux de dérivation dans le conduit (67, 68, 66).

3. Système selon la revendication 2, comprenant en outre :
- un conduit de flux de dérivation complémentaire de LCO₂ (64) disposé le long du conduit d'évacuation (41, 43, 61, 62, 63, 65, 30) à un emplacement en aval de la pompe d'injection (17) et en amont du dispositif de chauffage de LCO₂ (19) configuré pour prélever un flux de dérivation complémentaire à partir du conduit d'évacuation (41, 43, 61, 62, 63, 65, 30) et pour relier ce dernier au flux de dérivation dans le conduit (67, 68, 66) à un emplacement en amont de la soupape régulatrice de pression (21).

4. Système selon la revendication 1, comprenant en outre
- une soupape régulatrice de pression (21) disposée le long du flux de dérivation dans le conduit (75, 79, 68, 66) ; et,
- un refroidisseur de recyclage (22) disposé le long du conduit d'évacuation (41, 43, 61, 62, 73, 74, 30) situé en aval de la pompe d'injection (17) et en amont du dispositif de chauffage de LCO₂ (19), configuré pour recevoir un flux partiel provenant du flux de dérivation ;
- un conduit d'entrée de refroidisseur de recyclage (80) disposé le long du conduit de flux de dérivation (75, 79, 68, 66) à un emplacement en amont de la soupape régulatrice de pression (21) configuré pour relier le conduit de flux de dérivation (75, 79, 68, 66) à une entrée du refroidisseur de recyclage (22) ; et,
- un conduit de sortie du refroidisseur de recyclage (81) disposé le long du conduit de flux de dérivation (75, 79, 68, 66) à un emplacement en aval du conduit d'entrée du refroidisseur de recyclage (80),
dans lequel le flux partiel provenant du flux de dérivation est conduit à travers le refroidisseur de recyclage (22).

5. Procédé de maintien de la pression dans un réservoir intermédiaire de LCO₂ pendant l'évacuation de LCO₂ à partir du réservoir pour éviter la formation de glace sèche dans le réservoir de stockage intermédiaire de LCO₂ pendant l'évacuation, ledit système évitant ou réduisant le risque de formation d'hydrates dans le système à partir de l'eau contenue dans le LCO₂, ledit procédé comprenant les étapes suivantes :
A) évacuation d'un flux de LCO₂ à partir d'un réservoir de stockage intermédiaire de LCO₂ (10) ;
B) soumission du flux de LCO₂ de l'étape (A) à un pompage dans une première pompe à LCO₂ (15) ;
C) soumission du flux de LCO₂ de l'étape (B) à un pompage dans une pompe d'injection (17) ;
D) soumission du flux de LCO₂ de l'étape (C) à un chauffage dans un dispositif de chauffage de LCO₂ (19)
**caractérisé en ce qu'**il comprend en outre les étapes suivantes :
E) prélèvement d'un flux de dérivation de LCO₂ à partir d'un flux chauffé de LCO₂ obtenu à l'étape (D) ;
F) soumission du flux de dérivation de LCO₂ de l'étape (E) à un échange de chaleur liquide-liquide dans un dispositif de chauffage de réservoir (11) avec le contenu liquide du réservoir de stockage intermédiaire de LCO₂ (10) ; et,
G) retour du flux de dérivation de LCO₂ de l'étape (F) vers le flux de LCO₂ de l'étape (B).

6. Procédé selon la revendication 5, comprenant en outre les étapes suivantes :
H) soumission du flux de dérivation de LCO₂ de l'étape (E) à une pression réduite dans une soupape régulatrice de pression (21) ;
I) prélèvement d'un flux de dérivation complémentaire de LCO₂ de l'étape (C) ; et,
J) combinaison du flux de dérivation complémentaire de LCO₂ de l'étape (I) avec le flux de dérivation de LCO₂ de l'étape (E) avant de passer à l'étape (H).

7. Procédé selon la revendication 5, comprenant en outre les étapes suivantes :
H) soumission du flux de dérivation de LCO₂ de l'étape (E) à une pression réduite dans une soupape régulatrice de pression (21) ;
K) prélèvement d'un flux partiel à partir du flux de dérivation de LCO₂ de l'étape (C) ;
L) soumission du flux partiel de LCO₂ de l'étape (K) à un échange de chaleur liquide-liquide dans un refroidisseur de recyclage (22) avec le flux de LCO₂ de l'étape (C) avant de passer à l'étape (D) ; et,
M) combinaison du flux partiel de LCO₂ de l'étape (L) avec le flux de dérivation résiduel résultant de l'étape (K) avant de passer à l'étape (H).
